# FASCICULE DE BREVET EUROPEEN

(11) **EP 3 268 621 B1**
(45) Date de publication et mention de la délivrance du brevet: **06.05.2020**
(21) Numéro de dépôt: 16712962.6
(22) Date de dépôt: 07.03.2016
(51) Int. Cl.: F16B 5/02

(54) **DISPOSITIF ANTI-FLUAGE POUR ASSEMBLAGES VISSÉS, COMPRENANT UNE PREMIÈRE PIÈCE, NOTAMMENT EN FORME D'UN PANNEAU, EN UN MATÉRIAU INSUFFISAMMENT RÉSISTANT AUX EFFORTS DE SERRAGE**
KRIECHSCHUTZVORRICHTUNG FÜR GESCHRAUBTE ANORDNUNGEN MIT EINEM ERSTEN TEIL, INSBESONDERE IN FORM EINER PLATTE, AUS EINEM MATERIAL MIT UNGENÜGENDER BESTÄNDIGKEIT GEGENÜBER SPANNKRÄFTEN
ANTI-CREEP DEVICE FOR SCREWED ASSEMBLIES, COMPRISING A FIRST PART, NOTABLY IN THE FORM OF A PANEL, MADE OF A MATERIAL INSUFFICIENTLY RESISTANT TO CLAMPING FORCES

(30) Priorité: 10.03.2015 FR 1551990
(43) Date de publication de la demande: 17.01.2018
(73) Titulaire: LISI Automotive Rapid, 95650 Puiseux-Pontoise (FR)
(72) Inventeur: GABORIEAU, Yves, 78520 Guernes (FR)
(74) Mandataire: Berger, Helmut
(86) Numéro de dépôt international: PCT/FR2016/050521
(87) Numéro de publication internationale: WO 2016/142614

(56) Documents cités:
- WO-A1-2013/009804
- DE-A1- 19 523 932
- FR-A1- 2 800 810

## Description

Dispositif anti-fluage pour assemblages vissés, comprenant une première pièce, notamment en forme d'un panneau, en un matériau insuffisamment résistant aux efforts de serrage, selon le préambule de la revendication 1.

Un dispositif anti-fluage de ce type est connu du document FR 2 800 810. Mais ce dispositif connu présente l'inconvénient que la tenue de la bague dans la cage est insuffisante.

L'invention a pour but d'améliorer la tenue de la bague dans la cage.

Pour atteindre ce but, le dispositif anti-fluage selon l'invention comporte les caractéristiques qui sont énoncées dans la partie caractérisante de la revendication 1.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en coupe d'un assemblage vissé auquel l'invention est applicable ;
- les figures 2 et 3 sont des vues en perspective différentes d'un dispositif anti-fluage ;
- la figure 4 est une vue de dessus de la cage du dispositif selon l'invention ;
- la figure 5 est une vue en élévation de la cage du dispositif selon l'invention, dans la direction de la flèche V de la figure 4 ;
- la figure 6 montre la cage à l'état de flan, avant sa formation par pliage ;
- la figure 7 est une vue en coupe axiale du dispositif de fluage selon l'invention, monté dans le trou de passage d'un panneau, et
- la figure 8 est une vue latérale d'une bague anti-fluage selon l'invention.

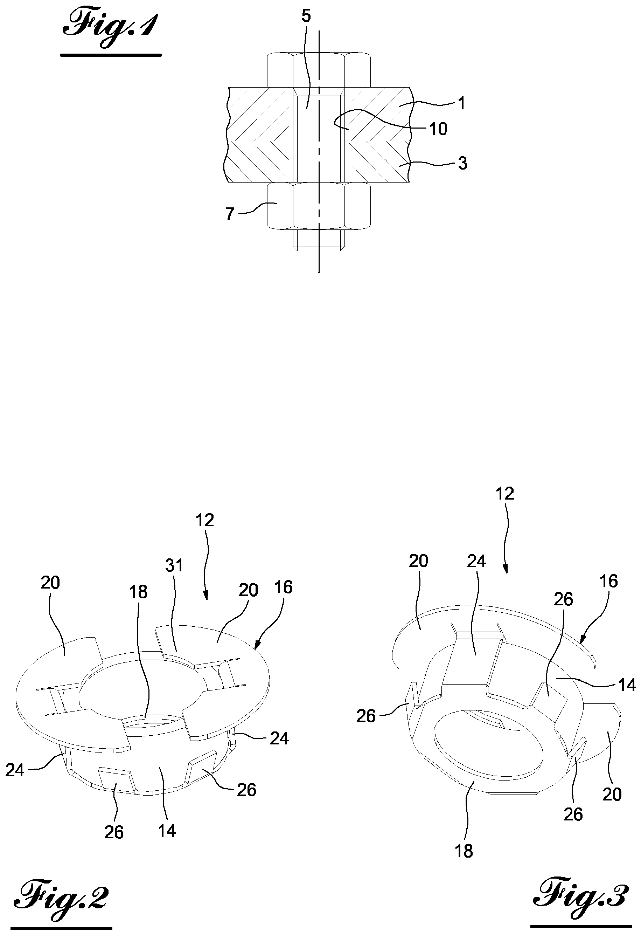

L'invention sera décrite ci-après à titre d'exemple non limitatif, dans son application à un assemblage tel que représenté à la figure 1, comprenant une première pièce en forme d'un panneau 1 en matière plastique, donc d'une résistance insuffisante aux efforts de serrage, une deuxième pièce de support 3, par exemple une tôle de la carrosserie d'un véhicule automobile et une vis 5 à écrou 7, qui maintient les deux pièces 1 et 3 serrées l'une contre l'autre.

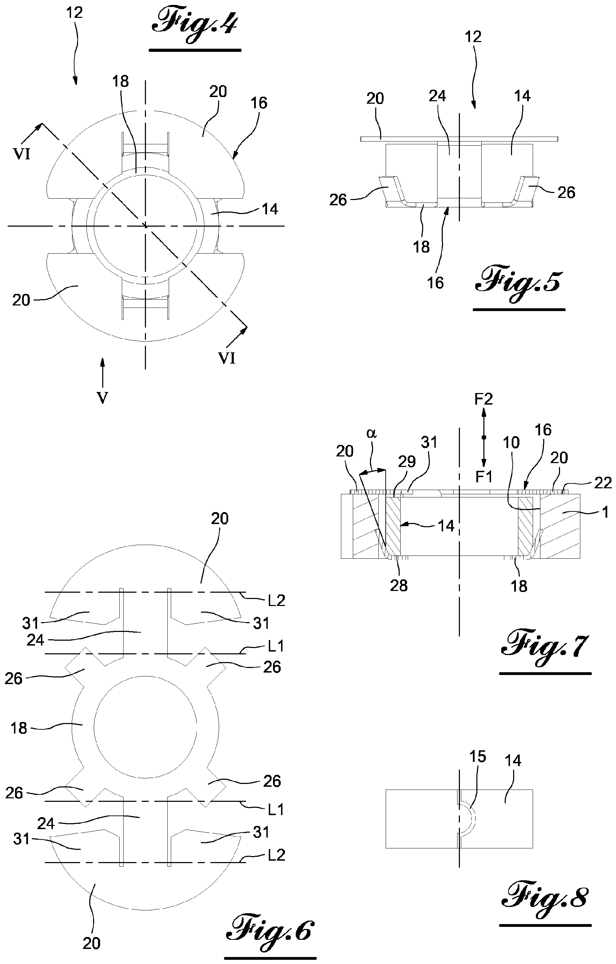

Pour éviter un desserrage suite à des phénomènes de fluage du panneau 1, l'invention propose de disposer dans le trou de passage 10 de la vis 5, pratiqué dans le panneau 1, un dispositif anti-fluage 12 tel que représenté en perspective sur les figures 2 et 3. Ce dispositif comporte une bague anti-fluage 14 et une cage 16 qui tient emprisonnée la bague 14. La bague est réalisée en un matériau, par exemple en métal, susceptible de résister aux efforts de serrage produits par la vis 5. La bague de forme cylindrique est d'une section transversale circulaire dans l'exemple représenté mais pourrait être aussi de forme ovale ou analogue et a une longueur égale à l'épaisseur du panneau 1 de façon que, lorsque le dispositif anti-fluage 12 est disposé dans le trou de passage 10 du panneau, les efforts de serrage soient supportés par la bague 14. La bague est fendue axialement en 15 (figure 8), ce qui la rend élastiquement déformable dans la direction périphérique. La fente n'est pas rectiligne, mais est plutôt en forme d'un V couché.

La cage 16 présente une configuration spécifique, permettant de retenir la bague 14, d'une part, et, d'autre part, de retenir la cage avec la bague emprisonnée, dans le trou 10.

A cette fin, la cage 16 comprend, à une extrémité, une portion annulaire 18 coaxiale à l'axe de la cage, de la bague et du trou, et, à son autre extrémité, deux parties en forme de demi-collerettes 20 qui sont diamétralement opposées l'une à l'autre. Ces collerettes s'étendent perpendiculairement à l'axe de la cage et, lorsque la cage est montée dans le trou 10, sont en appui sur la surface extérieure 22 entourant le trou 10. Les demi-collerettes peuvent ainsi accomplir la fonction d'une collerette d'appui pour la tête de la vis.

Les demi-collerettes 20 sont reliées à la partie annulaire 18 chacune par une barrette de liaison 24. Chaque barrette s'étend dans la direction axiale de la cage et présente une section transversale en forme d'un arc de cercle mais pourrait également avoir toute autre forme appropriée.

Pour retenir la cage dans le trou 10, la portion annulaire 18 comprend à sa périphérie radialement extérieure une pluralité de pattes 26, dans l'exemple au nombre de quatre, qui sont réparties de façon angulairement équidistante. Les pattes sont élastiquement déformables et s'étendent en direction des deux collerettes, en formant avec l'axe de la cage et donc du trou un angle aigu α. Les pattes ont une section transversale rectangulaire et présentent au bord radialement externe de leurs extrémités libres un angle vif de façon que, quand la bague est insérée dans le trou 10, les extrémités se plantent dans le matériau des parois internes du trou. On comprend aisément que ces pattes permettent d'insérer la cage dans le trou dans la direction de la flèche F1, en se déformant élastiquement, mais s'opposent à un démontage en direction de la flèche F2, les efforts de démontage provoquant un effet d'ancrage par les bords à angle vif dans la paroi du trou.

Concernant la retenue de la bague 14 dans la cage 16, comme on le voit sur les figures, la bague prend appui par une extrémité en 28 sur la partie d'extrémité annulaire 18 et par son autre extrémité 29 sur des prolongements 31 des deux demi-collerettes 20 qui s'étendent dans le plan de celles-ci, radialement vers l'axe du dispositif.

Comme il ressort des figures 2, 3 et 6, la cage 16 est réalisée par pliage à partir de la configuration à plat découpée d'un flan.

La figure 6 montre, situées dans un même plan, la portion annulaire 18, les pattes 26 à la périphérie extérieure de celle-ci, les barrettes de liaison 24 qui s'étendent radialement vers l'extérieur en étant diamétralement opposées l'une à l'autre et, à l'extrémité de chaque barrette, une demi-collerette 20.

La constitution de la cage se fait tout d'abord par pliage d'un angle de 90° des barrettes 24 vers le haut autour des lignes de pliage l1 et des pattes pour qu'elles se trouvent dans leur position à angle aigu, dans la même direction. Puis on place la bague 14 coaxialement sur la partie annulaire 18. Ensuite, on procède au repliage des demi-collerettes 20 d'un angle de 90° autour des lignes de pliage l2 de façon qu'elles s'étendent perpendiculairement à l'axe de la cage et de la bague et radialement vers l'extérieur. Dans cette position, les prolongements 31 qui s'étendent maintenant en direction de l'axe viennent en prise sur l'autre extrémité de la bague qui se trouve ainsi emprisonnée dans la cage. Le dispositif anti-fluage 12 ainsi réalisé est monté dans le trou de passage 10 dans la direction de la flèche F1 jusqu'à ce que les demi-collerettes 20 prennent appui sur le pourtour du trou, les pattes 26 élastiquement déformables assurant le maintien de la cage dans le trou en s'opposant à des efforts de démontage exercés dans la direction de la flèche F2.

Concernant la bague 14, elle est avantageusement en métal trempé et par exemple d'une épaisseur de 1 mm. La cage est avantageusement en acier inox écroui ou en acier trempé, pour avoir une certaine élasticité, ou en métal non trempé, tel que de l'acier normal.

Il est à noter que la cage pourrait obtenir son élasticité grâce à un traitement thermique après le montage de la bague. Puis on pourrait aussi lui appliquer un traitement de surface pour empêcher l'oxydation.

## Revendications

1. Dispositif anti-fluage pour assemblages vissés, comprenant une première pièce (1), notamment en forme d'un panneau, en un matériau insuffisamment résistant aux efforts de serrage qui lui sont appliqués dans l'assemblage vissé, tel que de la matière plastique, une deuxième pièce de support (3) à laquelle la première pièce (1) est fixée à l'aide d'une vis (5) traversant au moins la première pièce à travers un trou de passage (10) pratiqué dans celle-ci, du type comportant une bague anti-fluage (14) en un matériau résistant aux efforts de serrage, adaptée à être disposée dans le trou de passage (10) traversant la première pièce (1) de façon à supporter les efforts de serrage, la bague anti-fluage (14) étant disposée dans une cage (16), qui, en maintenant emprisonnée la bague, peut être montée dans le trou de passage (10), la cage étant pourvue d'éléments (20,26) de retenue de la cage dans le trou de passage (10), **caractérisé en ce que** la cage (16) est pourvue d'éléments d'extrémités (18,31) venant en appui sur les extrémités opposées de la bague (14) pour la retenue de la bague (14) dans la cage (16).

2. Dispositif anti-fluage selon la revendication 1, **caractérisé en ce que** les éléments de retenue de la cage (16) dans le trou de passage (10) comportent, à une extrémité, des éléments (20) en saillie perpendiculairement par rapport à l'axe de la cage, adaptés pour venir en appui sur la surface extérieure (22) du pourtour du trou de passage (10).

3. Dispositif anti-fluage selon la revendication 2, **caractérisé en ce que** les éléments d'appui (20) sont réalisés sous forme de segments de collerette.

4. Dispositif anti-fluage selon la revendication 3, **caractérisé en ce que** les éléments d'appui (20) comportent deux demi-collerettes.

5. Dispositif anti-fluage selon l'une des revendications 2 à 4, **caractérisé en ce que** les éléments d'appui accomplissent la fonction de collerette d'appui pour la tête de la vis (5).

6. Dispositif anti-fluage selon l'une des revendications 1 à 5, **caractérisé en ce que** les éléments de retenue de la cage (16) dans le trou de passage (10) comportent des pattes de serrage (26) élastiquement déformables, solidaires par une extrémité de la partie de la cage (16), disposées à l'intérieur du trou de passage (10) et dont l'autre extrémité est adaptée pour se planter dans la paroi interne du trou de passage, de façon à s'opposer à des forces de démontage de la cage du panneau.

7. Dispositif anti-fluage selon l'une des revendications 1 à 6, **caractérisé en ce que** les éléments de retenue de la bague (14) dans la cage (16) comportent au niveau de l'extrémité de la cage comportant les éléments de retenue (20), des pattes (31) venant en prise sur l'extrémité correspondante de la bague.

8. Dispositif anti-fluage selon la revendication 7, **caractérisé en ce que** les pattes (31) précitées sont formées par des prolongements des éléments d'appui (20).

9. Dispositif anti-fluage selon l'une des revendications 7 ou 8, **caractérisé en ce que** les éléments (18,31) de retenue de la bague (14) dans la cage (16) comportent, à l'extrémité opposée à celle des pattes (31), une partie annulaire (18) d'appui de la bague.

10. Dispositif anti-fluage selon l'une des revendications 1 à 8, **caractérisé en ce que** les parties d'extrémité de la cage (16) sont reliées par des éléments en forme de barrettes (24), qui s'étendent radialement à l'intérieur du trou de passage (10).

## Patentansprüche

1. Kriechschutzvorrichtung für geschraubte Anordnungen, umfassend einen ersten Teil (1), insbesondere in Form einer Platte, aus einem Material mit ungenügender Beständigkeit gegenüber Spannkräften, die in der geschraubten Anordnung darauf angewendet werden, z.B. aus Kunststoff, wobei ein zweites Lagerteil (3), auf dem das erste Teil (1) mittels einer Schraube (5) befestigt ist, mindestens das erste Stück über eine darin ausgebildete Durchgangsöffnung (10) durchquert, das einen Kriechschutzring (14) aus einem gegenüber Spannkräften beständigen Material umfasst und dazu geeignet ist, in der Durchgangsöffnung (10), die das erste Teil (1) durchquert, angeordnet zu werden, so dass es die Spannkräfte aufnimmt, wobei der Kriechschutzring (14) in einem Käfig (16) angeordnet ist, der in der Durchgangsöffnung (10) dadurch montiert werden kann, dass er den Ring einschließt, wobei der Käfig mit Halteelementen (20, 26) zur Befestigung des Käfigs in der Durchgangsöffnung (10) versehen ist,
**dadurch gekennzeichnet, dass** der Käfig (16) mit Endstücken (18, 31) versehen ist, die auf den entgegengesetzten Enden des Rings (14) aufliegen, um den Ring (14) im Käfig (16) zu halten.

2. Kriechschutzvorrichtung nach Anspruch 1, **dadurch gekennzeichnet, dass** die Elemente (16) zur Befestigung des Käfigs (16) in der Durchgangsöffnung (10) an einem Ende Elemente (20) umfassen, die senkrecht zur Achse des Käfigs abstehen und dazu geeignet sind, auf der Außenfläche (22) des Umfangs der Durchgangsöffnung (10) aufzuliegen.

3. Kriechschutzvorrichtung nach Anspruch 2, **dadurch gekennzeichnet, dass** die Halteelemente (20) als Flanschsegmente ausgebildet sind.

4. Kriechschutzvorrichtung nach Anspruch 3, **dadurch gekennzeichnet, dass** die Halteelemente (20) zwei Halbflansche umfassen.

5. Kriechschutzvorrichtung nach einem der Ansprüche 2 - 4, **dadurch gekennzeichnet, dass** die Halteelemente als Stützkrause des Schraubenkopfes (5) fungieren.

6. Kriechschutzvorrichtung nach einem der Ansprüche 1 - 5, **dadurch gekennzeichnet, dass** die Halteelemente des Käfigs (16) in der Durchgangsöffnung (10) elastisch verformbare Klemmlaschen (26) umfassen, die an einem Ende mit einem Teil des Käfigs (16) fest verbunden sind und in der Durchgangsöffnung (10) angeordnet sind, und deren anderes Ende dazu geeignet ist, sich auf der Innenwand der Durchgangsöffnung zu befestigen, um sich den Demontagekräften des Käfigs der Platte entgegenzusetzen.

7. Kriechschutzvorrichtung nach einem der Ansprüche 1 - 6, **dadurch gekennzeichnet, dass** die Halteelemente des Rings (14) im Käfig (16) auf Höhe des Endes des Käfigs mit den Halteelementen (20) Laschen (31) umfassen, die am entsprechenden Ende des Rings in Eingriff kommen.

8. Kriechschutzvorrichtung nach Anspruch 7, **dadurch gekennzeichnet, dass** die Laschen (31) als Verlängerungen der Halteelemente (20) ausgebildet sind.

9. Kriechschutzvorrichtung nach einem der Ansprüche 7 oder 8, **dadurch gekennzeichnet, dass** die Halteelemente (18, 31) des Rings (14) im Käfig (16) an dem den Laschen (31) gegenüberliegenden Ende ein ringförmiges Teil (18) zur Unterstützung des Rings umfassen.

10. Kriechschutzvorrichtung nach einem der Ansprüche 1 - 8, **dadurch gekennzeichnet, dass** die Endteile des Käfigs (16) über bandförmige Elemente (24), die sich radial im Inneren der Durchgangsöffnung (10) erstrecken, verbunden sind.

## Claims

1. Anti-creep device for screwed assemblies, comprising a first part (1), in particular in the form of a panel, made of a material that is insufficiently resistant to the clamping forces applied to it in the screwed assembly, such as a plastic material, a second support part (3) to which the first part (1) is fixed by means of a screw (5) passing at least the first part through a through-hole (10) made in said first part, and of the type that comprises an anti-creep ring (14) made of a material that is resistant to clamping forces, and is designed to be disposed in the through-hole (10) passing through the first part (1) in order to withstand the clamping forces, wherein the anti-creep ring (14) is arranged in a retaining bracket (16), which, while retaining the ring, may be mounted in the through-hole (10), the retaining bracket being provided with elements (20, 26) holding the retaining bracket in the through-hole (10),
**characterized in that** the retaining bracket (16) is provided with end elements (18, 31) bearing on the opposite ends of the ring (14) and retaining the ring (14) in the retaining bracket (16).

2. Anti-creep device according to claim 1, **characterized in that** the elements holding the retaining bracket (16) in the through-hole (10) comprise, at one end, elements (20) projecting perpendicularly to the axis of the retaining bracket, and designed to bear on the outer surface (22) of the periphery of the through-hole (10).

3. Anti-creep device according to claim 2, **characterized in that** the support elements (20) are in the form of flange segments.

4. Anti-creep device according to claim 3, **characterized in that** the support elements (20) comprise two half-flanges.

5. Anti-creep device according to one of claims 2 to 4, **characterized in that** the support elements serve as support flanges for the head of the screw (5).

6. Anti-creep device according to one of claims 1 to 5, **characterized in that** the elements retaining the retaining bracket (16) in the through-hole (10) comprise clamping tabs (26) that are elastically deformable and are integral with one end of the part of the retaining bracket (16), disposed inside the through-hole (10), while the other end is designed to be inserted in the internal wall of the through-hole, in order to oppose the disassembly forces of the retaining bracket of the panel.

7. Anti-creep device according to one of claims 1 to 6, **characterized in that** the retaining elements of the ring (14) in the retaining bracket (16) comprise at the end of the retaining bracket comprising the support elements (20), tabs (31) that engage with the corresponding end of the ring.

8. Anti-creep device according to claim 7, **characterized in that** the above-mentioned tabs (31) are in the form of extensions of the support elements (20).

9. Anti-creep device according to one of claims 7 or 8, **characterized in that** the elements (18, 31) for retaining the ring (14) in the retaining bracket (16) comprise, at the end opposite to that of the tabs (31), an annular part (18) to support the ring.

10. Anti-creep device according to one of claims 1 to 8, **characterized in that** the end parts of the retaining bracket (16) are connected by elements in the form of bars (24), which extend radially inside the through-hole (10).
